# NEW EUROPEAN PATENT SPECIFICATION

(11) **EP 2 105 013 B2**
(45) Date of publication and mention of the opposition decision: **22.04.2020**
(45) Mention of the grant of the patent: 19.10.2011
(21) Application number: 07862633.0
(22) Date of filing: 07.12.2007
(51) Int. Cl.: G11B 27/00, G11B 27/036, H04N 21/432, H04N 21/458, H04N 21/6587, H04N 21/81, H04N 5/76

(54) **SYSTEMS AND METHODS FOR VIEWING SUBSTITUTE MEDIA WHILE FAST FORWARDING PAST AN ADVERTISEMENT**
SYSTEME UND VERFAHREN ZUR BETRACHTUNG VON ERSATZMEDIEN WÄHREND DES VORSPULENS EINER WERBUNG
SYSTÈMES ET PROCÉDÉS PERMETTANT DE VISIONNER UN CONTENU MULTIMÉDIA DE SUBSTITUTION PENDANT L'AVANCE RAPIDE D'UN MESSAGE PUBLICITAIRE

(30) Priority: 22.12.2006 US 644294
(43) Date of publication of application: 30.09.2009
(60) Divisional application: 11173433.1
(73) Proprietor: Rovi Guides, Inc., San Jose, CA 95002 (US)
(72) Inventor: CRANER, Michael L., Chester Springs PA 19425 (US); KNEE, Robert A., Lansdale, Pennsylvania 19445 (US); ELLIS, Michael D., Boulder, Colorado 80303 (US)
(74) Representative: Pisani, Diana Jean
(86) International application number: PCT/US2007/025084
(87) International publication number: WO 2008/088508

(56) References cited:
- EP-A- 1 705 908
- WO-A-01/89209
- US-A1- 2002 144 262
- US-A1- 2005 076 359
- NICK HEINLE, BILL PENA: "Webdesign mit JavaScript" 2002, O'REILLY VERLAG , XP002484231 ISBN: 3-89721-275-7 page 103 - page 126

## Description

### Background of the Invention

This invention is directed to systems and methods for fast forwarding past commercials and advertisements when playing recorded media in video or audio entertainment systems.

Interactive media guidance applications, such as interactive television program guides, are well known in the art. Using interactive media guidance applications, users may select and record content that is provided by content providers (e.g., broadcast programs) with a recording device. When a user plays back a recording, the recording includes a recorded program and commercials distributed with the program. Some systems have allowed the user to avoid advertisements using fast forward or skip features. Such features, however, decrease or eliminate the intended effect of the advertisement. As a result, some advertisers have resisted these features because such features waste their advertising dollars.

Approaches have been proposed to allow users to fast forward through an advertisement while still giving advertisers some of the benefit of their dollars. In one approach provided by Tivo corporation (of San Jose, CA), a banner advertisement is displayed while the user fast-forwards through a video advertisement. In another approach provided by OpenTV (of San Francisco, CA), sometimes referred to as a "speed bump" feature an advertiser's logo is displayed during fast-forward. These approaches are limited to overlaying a graphical banner or logo over the video advertisement. Such a banner or logo is a static display that requires additional hardware and advertisement management software in the user's equipment for overlaying the graphic over the underlying video.

Accordingly, it is desirable to provide systems and methods for fast forwarding advertisements while displaying substitute media that is incorporated in the advertisements. It is also desirable to provide a tool for inserting substitute advertising media in an advertisement such that the substitute advertising media is perceptible to the user when the advertisement is fast forwarded.

US2002/0144262 discloses presenting viewers with an alternative brief version of a recorded advertisement when they choose to fast forward through or skip the recorded advertisement. The alternative advertisement may be displayed instead of or in conjunction with the recorded advertisement.

US2005/0076359 discloses a system for modifying commercials from multispeed playback which detects when a commercial break begins in a broadcast program content stream. If the viewer selects fast-forward playback mode during the commercial break, then the system selects the appropriate alternative content to be played to the viewer.

WO01/89209 discloses a system for substituting an alternate message in response to a command to disrupt a first message, wherein the system determines the indentifying code of a first message and detects a command to disrupt the first message. The system locates an alternate message, if available, and matches the alternate message with play capabilities of the play device. The device is then instructed to play the alternate message.

### Summary of the Invention

In accordance with the principles of the present invention, systems and methods for displaying substitute media (e.g., substitute advertising media) while fast forwarding through advertisements, are provided. Aspects of the invention are set out in independent claims 1 and 8.

Certain media may be provided to users of interactive media guidance applications such that the users may fast forward the media. For example, a user may fast forward media that is at least partially recorded on a storage device, such as a television program that is recorded with a DVR (either a local DVR or a network DVR). As another example, a user may fast forward media that is cached in a buffer while the user's equipment receives the media (e.g., caching broadcast television, and pausing or rewinding broadcast television on a DVR device). As still another example, a user may fast forward media that is provided from a remote location as a media stream (e.g., a VOD stream provided by a VOD server).

The media that is provided to the user's equipment may include specific content (e.g., television programs) and advertisements. When a user fast forwards the media, the user may also fast forward advertisements, which then lose their advertising value. To maintain advertising value while the user fast forwards, advertisements may be constructed such that an advertising message remains perceptible to the user while the advertisement is fast forwarded. More specifically, advertisements may be constructed to include perceptible substitute media that is displayed in response to a fast forward instruction.

Advertisements may be constructed in any suitable manner to provide substitute media that is perceptible during fast forwarding. In particular, advertisements may be constructed such that substitute media is only displayed in the video frames that are displayed as part of the fast forward stream. For example, the substitute media may be incorporated as a part of the advertisement that remains perceptible while fast forwarding (e.g., the I frames of an advertisement encoded using the MPEG-2 standard). As another example, video frames of the substitute media may be inserted among the video frames of the advertisement such that the video frames of the substitute media are displayed when the user fast forwards (e.g., as hidden substitute media video frames).

Data sources associated with the interactive media system may provide advertisement data that is associated with particular advertisements. The advertisement data may be provided as part of the advertisement stream (e.g., "in-band" to the advertisement video stream), or in a separate or "out-of-band" data stream. The advertisement data may include interactive media guidance application instructions such as, for example, which video frames to display when fast forwarding (e.g., by flagging the particular subset of video frames), the display configuration for the substitute media, whether the user may fast forward past a particular advertisement, permissible fast forward speeds, or any other interactive media guidance application instruction.

Advertisers may use an advertisement tool to allow an operator to construct an advertisement with substitute media. The advertisement tool may allow the operator to provide an advertisement and/or substitute media, and select device configurations (e.g., firmware and hardware configurations) that can be used to identify the specifics of the fast forward implementation for the device(s) to which the advertisement is targeted. Using the information provided by the operator, the tool may incorporate substitute media in the advertisement using any suitable approach such that the substitute media is displayed when the user fast forwards the advertisement on equipment having the selected configuration. The advertisement tool may include a preview feature that permits the operator to preview the advertisement and substitute media displayed in response to a fast forward request, where the tool allows the operator to specify fast forward rates and device configurations.

### Brief Description of the Drawings

The above and other features of the present invention, its nature and various advantages will be more apparent upon consideration of the following detailed description, taken in conjunction with the accompanying drawings in which:

FIG. 1 is a diagram of an illustrative interactive media system in accordance with one embodiment of the present invention;

FIG. 2 shows an illustrative display screen showing television listings in accordance with one embodiment of the present invention;

FIG. 3 shows an illustrative display screen showing information relating to a television program in accordance with one embodiment of the present invention;

FIG. 4 shows an illustrative display screen showing a television program in full screen after a recording has commenced in accordance with one embodiment of the present invention;

FIG. 5 shows an illustrative display screen showing recorded programs listings in accordance with one embodiment of the present invention;

### Detailed Description

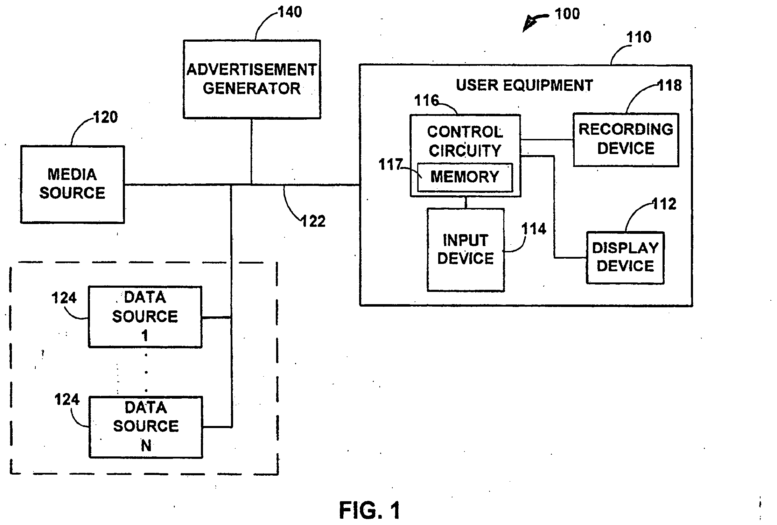

FIG. 1 shows illustrative interactive media system 100 in accordance with one embodiment of the invention. User equipment 110 receives media in the form of signals from media source 120 over communications path 122. In practice there may be multiple media sources 120 and user equipment 110, but only one of each has been shown in FIG. 1 to avoid over-complicating the drawing.

Media source 120 may be any suitable media source such as, for example, a cable system headend, satellite media distribution facility, media broadcast facility, internet protocol television (IPTV) headend, on-demand server (e.g., VOD server), website, game service provider (e.g., for online gaming), or any other suitable facility or system for originating or distributing media. Media source 120 may be configured to transmit signals over any suitable communications path 122 including, for example, a satellite path, a fiber-optic path, a cable path, an Internet path, or any other suitable wired or wireless path. The signals may carry any suitable media such as, for example, television programs, games, music, news, web services, video, or any other suitable media. In some embodiments, media source 120 may include control circuitry for executing requests from a trick-play client or an interactive media guidance application implemented in, for example, user equipment 110 or a VOD server.

User equipment 110 may include any equipment suitable for providing an interactive media experience. User equipment 110 may include television equipment such as a television, set-top box, recording device, video player, user input device, or any other device suitable for providing an interactive media experience. For example, user equipment 110 may include a DCT 2000, 2500, 5100, 6208 or 6412 set-top box provided by Motorola, Inc. In some embodiments, user equipment 110 may include computer equipment, such as a personal computer with a television card (PCTV). In some embodiments, user equipment 110 may include a fixed electronic device such as, for example, a gaming system (e.g., X-Box, PlayStation, or GameCube) or a portable electronic device, such as a portable DVD player, a portable gaming device, a cellular telephone, a PDA, a music player (e.g., MP3 player), or any other suitable fixed or portable device.

In the example of FIG. 1, user equipment 110 includes at least control circuitry 116, display device 112, user input device 114, and recording device 118 which may be implemented as separate devices or as a single device. An interactive media guidance application may be implemented on user equipment 110 to provide media guidance functions to the user for media displayed on display device 112. In some embodiments, the interactive media guidance application may be or include an interactive television application, a trick-play client, or any other application for providing media features to the user.

Display device 112 may be any suitable device such as, for example, a television monitor, a computer monitor, or a display incorporated in user equipment 110 (e.g., a cellular telephone or portable music player display). Display device 112 displays the media transmitted by media source 120 over path 122, and the displays of the trick-play client. Display device 112 may also be configured to provide for the output of audio.

User input device 114 may be any suitable device for interfacing with the interactive media guidance application. For example, user input device 114 may be a remote control, keyboard, mouse, touch pad, touch screen or voice recognition interface. User input device 114 may communicate with user equipment 110 and control circuitry 116 using any suitable communications link. For example, user input device 114 may use an infra-red (IR), radio-frequency, Bluetooth, wireless (e.g., 802.11), wired, or any other suitable communications link.

Control circuitry 116 is adapted to receive user inputs from input device 114 and execute the instructions of the interactive media guidance application. Control circuitry 116 may include one or more tuners (e.g., analog or digital tuners), encoders and decoders (e.g., MPEG decoders), processors (e.g., Motorola 68000 family processors), memory 117 (e.g., RAM and hard disks), communications circuitry (e.g., cable modem circuitry), input/output circuitry (e.g., graphics circuitry), connections to the various devices of user equipment 110, and any other suitable component for providing analog or digital media programming, program recording, and interactive media guidance features. In some embodiments, control circuitry 116 may be included as part of one of the devices of user equipment 110 such as, for example, part of display 112 or any other device (e.g., a set-top box, television and video player).

Recording device 118 may be a personal video recorder (PVR), digital video recorder (DVR), video cassette recorder (VCR), DVD-recorder, compact disc recorder, or any other suitable recording device or storage device. In some embodiments, recording device 118 may be a storage device for storing or recording content or data recorded or provided by other components of interactive media system 100 (e.g., a storage device for caching live television programs to enable trick play functions). Recording device 118 may include one or more tuners, and may be configured to cache media as the user receives it with user equipment 110 (e.g., cache the currently tuned channel) to provide trick-play functions for the user.

In some embodiments, recording device 118 may include a processor (e.g., a microcontroller or microprocessor or the like) that is used to receive and execute interactive media guidance application instructions. Recording device 118 may include memory such as random-access memory for use when executing applications. Nonvolatile memory may also be used to store a boot-up routine or other instructions. A hard disk and other storage in recording device 118 may be used to support databases (e.g., a database of media guidance information for recorded programs, or a database of advertisement information for recorded or cached advertisements). A hard disk or other storage in recording device 118 may also be used to record media such as television programs or video-on-demand content or other content provided to recording device 118.

In some embodiments, recording device 118 may include IR communications circuitry or other suitable communications circuitry for communicating with a remote control (e.g., with user input device 114). Recording device 118 may also include dedicated buttons and a front-panel display. The front-panel display may, for example, be used to display the current channel to which the recording device is tuned.

In some embodiments, recording device 118 may be a network recording device that is located outside of user equipment 110. In some embodiments, the network recording device may be incorporated in content source 120 (e.g., at the head-end of a cable plant), data source 124, a VOD server (not shown), user equipment 110 (e.g., as a second recording device, or a hard drive on a home computer), an Internet server, or any other suitable device. In some embodiments, the network recording device may be a stand alone device (e.g., a commercial network recording device, or a DVR device in a home or neighborhood network). The network recording device may receive instructions to perform recordings from the interactive media guidance application implemented on any of a plurality of instances of user equipment 110.

In some embodiments, the interactive media guidance application may provide features to the user with a client/server approach. There may be one server for each instance of user equipment 110, one for multiple instances of user equipment 110, or a single server may serve as a proxy for each instance of user equipment 110.

Any suitable number of users may have equipment, such as user equipment 110, connected to media source 120, data sources 124 and advertisement generator 140. A single user may also have multiple instances of user equipment 110. But for the clarity of the figure, the equipment of only a single user is shown. The equipment of the plurality of users may be connected to media source 120, data sources 124 and advertisement generator 140 using a cable television network, a satellite television network, a local area network (LAN), a wireless network, the Internet (e.g., using a DOCSIS modem), or any other suitable means. In some embodiments, the equipment of the plurality of users may be connected to each other using any suitable means.

User equipment 110 may receive interactive media guidance application data from one or more data sources 124. Data sources 124 may provide data for a particular type of media or for a particular application. For example, one data source 124 may provide data for non-on-demand media (e.g., non-pay and pay-per-view programs), and another may provide data for on-demand media (e.g., VOD programs). Or, for example, a single data source may provide both of these types of data. For example, one data source 124 may provide data for an interactive media guidance application. Another data source 124 may, for example, provide data for another interactive application (e.g., a home shopping application, and real-time data such as sports scores, stock quotes, news data and weather data). In some embodiments, data sources 124 may provide data to the interactive media guidance application using a client/server approach. There may be one server per data source, one for all sources or, in some embodiments, a single server may communicate as a proxy between user equipment 110 and various data sources 124. In such embodiments, data source 124 may include control circuitry for executing the instructions of the online media guidance application. In some embodiments, data source 124 may be a storage device for storing or recording content or data recorded or provided by other components of interactive media system 100 or by a content or data provider (e.g., a VOD server).

In some embodiments, data source 124 may provide advertisements (e.g., text, graphics and video advertisements for various programs, products, services, and interactive media guidance application features) to the interactive media guidance application. The advertisements may be provided by a dedicated data source, or the advertisements, along with other data, may be provided by one or more data sources.

Data source 124 may provide advertisement data associated with the advertisements using any suitable technique. For example, advertisement data may be distributed in conjunction with transmitted content or media (e.g., incorporated in-band with the media), distributed separately from the transmitted media (e.g., out-of-band in a data stream that accompanies the media stream), or by any other suitable distribution means. In such an approach, the interactive media guidance application may process the in-band or out-of-band media, or process the data stream to obtain the advertisement data (e.g., extract an identifier, instructions, or a URL from a data component within an MPEG-2 transport stream).

The terminology "in-band" and "out-of-band" originally referred to signaling (e.g., within a radio transmission) that which was within or outside of, respectively, the primary radio frequency band. Today, "band" is understood by one skilled in the art to refer to any primary digital or analog conduit for transmission including a channel, stream, tunnel, socket, circuit, virtual circuit, or path whether wired or wireless. In-band advertisement data would thus be understood to be advertisement data that is carried in the same channel, stream, tunnel, socket, etc., as the advertisement for which it is associated or to any primary content feed to which it is associated. An example of in-band carriage of advertisement data in an IP stream would be opening an IP socket between a sending application and a receiving application that is used to carry the advertisement data in addition to a primary content stream (e.g., the video stream of advertisement). An example of out-of-band carriage of advertisement data in an MPEG-2 system would be the carriage of the advertisement data in a digital stream that is carried on an analog carrier at a first frequency and the carriage of the advertisement itself on a carrier at a second frequency, different from the first. In MPEG-2, a single service transport stream (that may be part of a multiple service transport stream) is composed of multiple components including a primary video component, a primary audio component and then one or more data components. If the advertisement data (or substitute media) is carried in one of the primary or secondary video, audio, or data streams, it is considered in-band to the service; if not, it is considered out-of-band to it.

In an MPEG-4 system, in-band advertisement data or substitute media may be carried in a separate video object plane. For ATSC digital video, the concept of the analog vertical blanking interval (VBI) has been expanded to include a digital data in-band VBI equivalent. More information can be found in the International Standard for Organization ISO-13818 standard, entitled Information Technology Generic Coding of Moving Pictures and Associated Audio Information, and the Consumer Electronic Association CEA-708B standard, entitled Digital Television (DTV) Closed Captioning, each incorporated herein by reference in its entirety.

The interactive media guidance application may also obtain the advertisement data associated with the played media by monitoring such as, for example, the channel that the user is viewing. The interactive media guidance application, using this information (e.g., channel information) and the current time, may access a database (e.g., a database in data source 124) that contains the interactive media guidance application data for the channels that are available to the user to obtain the desired advertisement data. For example, when the user is viewing channel five, the interactive media guidance application may check the database and, from the interactive media guidance application data associated with channel five, determine which advertisements will be displayed and the advertisement data associated with those advertisements (e.g., to identify images or video clips associated with the advertisements for channel 5).

Data source 124 may provide a unique identifier associating advertisement data with one or more advertisements. The unique identifiers may be any suitable identifiers such as, for example, an arbitrary number or character string, a word or phrase related to the advertisement (e.g., advertisement title, advertiser name, or product name), time stamp, or any other suitable identifier.

Interactive media system 100 includes advertisement generator 140. Advertisement generator 140 may be configured to provide advertisements that include substitute media to any other element of system 100 including, for example, media source 120 and user equipment 110. In some embodiment, advertisement generator 140 may include an advertisement tool for incorporating advertisement data and/or substitute media in an advertisement. Advertisement generator 140 may also be configured to provide advertisement data as described above in connection with data source 124.

FIG. 1 shows media source 120, data sources 124, and advertisement generator 140 as separate elements. In practice, their functionality may be combined and provided from a single system at a single facility, or multiple systems at multiple facilities. For example, one media source 120 and data source 124 may be combined to provide VOD content and associated VOD data. As another example, a separate data source 124 may be associated with each of a plurality of television broadcasters and may provide data that is specific to those broadcasters (e.g., advertisements for future programming of the broadcasters, or logo data for displaying broadcasters' logos in interactive media guidance application display screens). As still another example, data source 124 and advertisement generator 140 may be combined to provide advertisements that include substitute media and associated advertisement data..

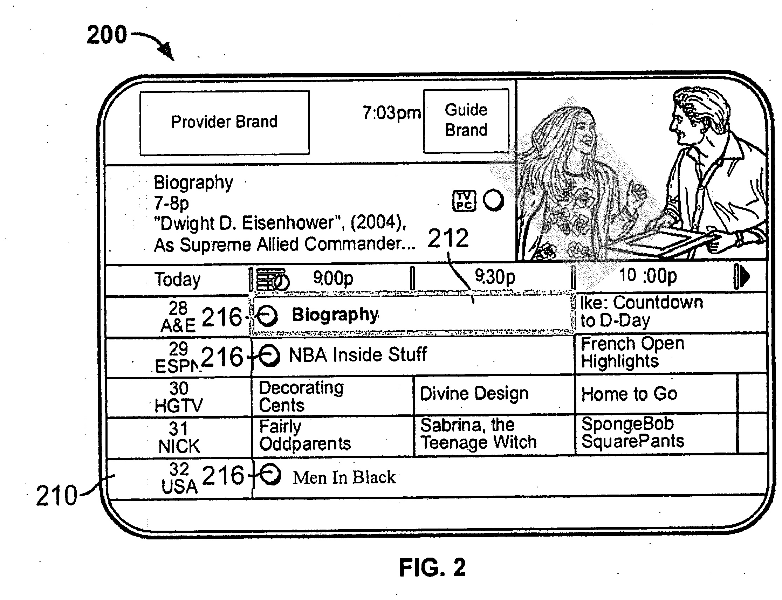

FIG. 2 shows illustrative interactive media guidance application screen 200 that may be displayed on display 112. The user may access interactive media guidance application screen 200 by any suitable means such as, for example, pressing a "menu," "guide," or other suitable key or key sequence on user input device 114, navigating from another interactive media guidance application screen or menu, or by any other means known in the art. Illustrative interactive media guidance application screen 200 contains a grid of program listings 210, which includes program titles, channels and scheduled broadcast times. The screen may include any other suitable program information. In other embodiments, the interactive media guidance application screen may include a list (i.e., a single column) of programs. The user may select a desired program listing with highlight region 212 using user input 116, or any other suitable means.

To schedule a program or other suitable video for recording, a user may highlight a desired program, as shown in FIG. 2 where "Biography" on channel 28 is highlighted, and press a "Record" key or key sequence, or select a "Record" option from the screen using user input device 114 (FIG. 1). Any suitable device from user equipment 110 (FIG. 1), for example recording device 118 (FIG. 1), may record the program. Alternatively, the program may be recorded by any other suitable device that is not part of user equipment 110. In response to receiving an instruction to record the program, the interactive media guidance application may place icon 216 on the listing associated with the selected program to indicate to the user that the interactive media guidance application has scheduled the program for recording (e.g., in FIG. 2, Biography, NBA Inside Stuff and Men In Black are scheduled for recording).

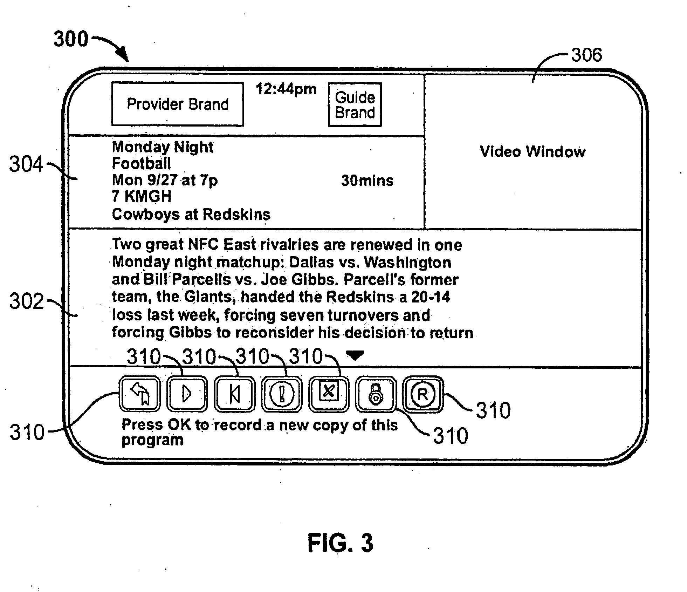

Prior to choosing to record a program, the user may request additional information regarding the program. For example, the user may highlight a listing using highlight region 212 and press an "Information" key or key sequence on user input device 114. In response to receiving the user request, the interactive media guidance application may display an information screen. FIG. 3 shows illustrative information screen 300, which includes detailed information section 302, program description area 304 (including the program title, time and channel), and video window 306. Screen 300 also includes selectable icons 310, some or all of which may include text descriptions. The screen may include options for recording, series recording, parental lock, or any other suitable interactive media guidance application action. If a user determines that he wants to record the program, the user may schedule the recording by pressing a "Record" key or key sequence, selecting a "Record" option from the screen using a user input device (e.g., user input device 114, FIG. 1), or by any other suitable means.

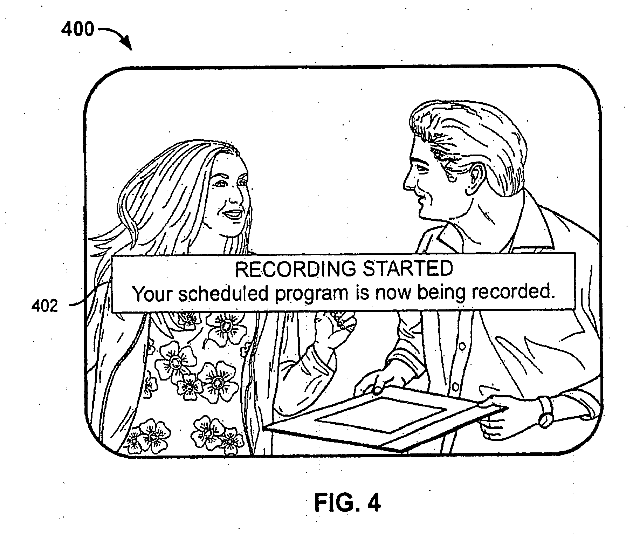

In some embodiments, the user may be watching a program on display device 112 (FIG. 1) in a full screen view, for example full screen view 400 shown in FIG. 4, and decide to record the program. To record the program, the user may press a "Record" key or key sequence on user input device 114 (FIG. 1), or use any other suitable means. A pop-up notice, such as pop-up notice 402, may appear to confirm that recording has begun. Such a notice may also appear in response to receiving a user confirmation to record the program). In some embodiments, pop-up notice 402 may appear automatically when a previously-scheduled recording commences.

The recording device may record a selected program by tuning to the channel or selecting the transport stream of the selected program, and recording all of the media that is transmitted on the channel or transport stream during the scheduled transmission time of the program. The recording device may be located in the user's equipment (e.g., a DVR), or may be a remote server to which the interactive media guidance application has access (e.g., network DVR). The recorded media may thus include the selected program, and advertisements displayed during breaks in the program (e.g., during commercial breaks of a sporting event, or every 10 or 15 minutes of a series).

In some embodiments, the recording device may be configured to cache the programs that the user views. For example, the recording device may be configured to cache only specific channels (e.g., favorite channels), or the recording device may be configured to cache the channel that the user is watching. The cached programs may be available for playback using trick play instructions (e.g., pause, rewind, fast forward). If an entire program is stored in a cache, the recording device may save the cached program as a recording.

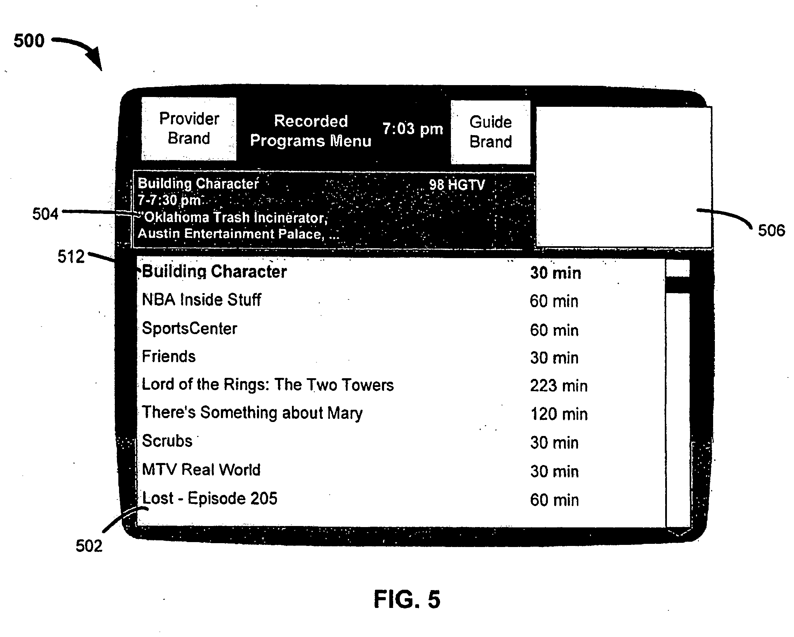

Once the recording device has recorded selected programs, the user may direct the interactive media guidance application to display listings of the recorded programs that the user may select for playback. For example, the user may access a recorded programs menu by pressing a "Recorded Programs Menu" key or key sequence, navigating from another interactive media guidance application screen (e.g., selecting a "Recorded Programs Menu" option from an interactive media guidance application screen using user input device 114, FIG. 1), or by any other suitable means. Recorded programs menu 500, shown in FIG. 5, shows an illustrative display of recorded program listings. Menu 500 includes
recordings listings 502, detailed information section 504 and video window 506. Listings 502 include the program title and program length. The listings may include any other suitable information (e.g., channel number or date recorded). In some embodiments,
menu 500 may include listings for cached programs and listings for programs stored remotely but not.recorded by the user (e.g., VOD programs), or such programs may be listed on additional, separate screens.

To play back a recording, the user may select the listing (e.g., using highlight region 512) associated with the recording from listings 502 and press a "Play" key or key sequence on the user input device, select a play option from an interactive media guidance application screen, or perform any other suitable step to initiate playback. The user may alternatively press an "information" key or the like to cause an information screen to be displayed (such as information screen 300 of FIG. 3) and select a "Play" icon from the information screen. In response to the user request, the interactive media guidance application may direct the user's equipment to play back the recording by, for example, directing the recording device (e.g., recording device 118) to provide the appropriate video and audio streams to the display device (e.g., display device 112) to display the selected recording.

Many programs are recorded or cached with advertisements. When such programs are played back, the recorded advertisements may also be played back as part of the recording. To avoid viewing an advertisement, the user may fast forward past the advertisement. In some embodiments, the user may also fast forward past advertisements when trick playing a program or fast forward past the advertisements in a DVD. For example, after pausing, the user may resume play back and fast forward past advertisements until the user reaches the end of the cache. The principle of this invention, displaying substitute media while fast forwarding suitable content (e.g., recordings, cached media or on-demand media), can be applied to non-advertisement media as well. For simplicity however, the following discussion will be limited to recorded advertisements. It will be understood, however, that the embodiments and features discussed may also be implemented in the context of on-demand media and of media that is not an advertisement. Particular embodiments specific to cached media and on-demand media embodiments will also be described in more detail below.

The user may instruct the interactive media guidance application to fast forward the recording, for example to fast forward past an advertisement, in any suitable manner. For example, the user may press or press and hold a "fast forward" key on the user input device (e.g., user input device 114, FIG. 1) to initiate fast forwarding. As another example, the user may select a fast forward option from a transport control bar (e.g., transport control bar 810 discussed below in connection with FIG. 8). The interactive media guidance application may then fast forward the display of the recording (e.g., by displaying every other frame, every third frame, every tenth frame, or every n-th frame) until the user instructs the interactive media guidance application to resume playback of the recording.

In some embodiments, the playback stream may be a video encoded using the MPEG-2 standard. An MPEG-2 video stream consists of a series of data frames encoding pictures. The frames may be encoded as intracoding frames (I frames), forward prediction frames (P frames), and bidirectional prediction (B frames). The stream is transmitted as a series of I, P, and B frames organized in a GOP (Group Of Pictures) structure, where the GOP typically begins with an I frame, ends just prior to the subsequent I frame, and includes 12-15 frames. For example, the frame sequence for the advertisement may be IBBPBBPBBPBBP.

A video is first encoded with an I-frame. The I-frame includes all of the image of the video frame, but may be compressed by exploiting spatial redundancy in the image. The I-frame is followed by P and B frames, which only include the difference in the video between the past frame and the current frame (P frame), and the difference between the past frame, current frame, and following frame (B frame). By representing a video in such a manner, the video may be transmitted in an efficient and bandwidth-sensitive manner.

To fast forward an MPEG-2 playback stream, the interactive media guidance application may display the I frames and only a subset of the B and P frames of the GOP (e.g., only the P frames). In some embodiments, the interactive media guidance application may display only the I frames (e.g., when the user is fast forwarding at 12-15x, or repeat the display of each I-frame to fast forward at a lower speed).

To ensure that an advertisement is not lost when it is fast forwarded, advertisers may construct advertisements such that information (i.e., substitute media) is displayed while the user fast forwards past the advertisement. The substitute media that is displayed may be configured to appear and persist in the viewer's field (e.g., be perceptible to the user) even or only during the fast forward. In some embodiments, the substitute media may be a substitute advertisement.

The substitute media displayed while fast forwarding an advertisement may be any suitable media. For example, the substitute media may include an image (e.g., an MPEG I-frame) for displaying while fast forwarding an advertisement. The substitute media may be provided as a separate video frame incorporated in the advertisement (e.g., as frames added to the advertisement).

The interactive media guidance application may identify the video frames that include substitute media in any suitable manner. For example, advertisement data associated with the advertisement may identify the specific video frames of the substitute media. The advertisement data include, for example, identifiers, URLs, interactive media guidance application commands, meta-data, images or video clips (or links therefore), flags (e.g., for video frames that include substitute media or to identify the video frames from which to begin displaying substitute media) or any other suitable data.

In such cases, prior to or in response to an instruction to fast forward, the interactive media guidance application may retrieve advertisement data associated with the currently played back recording, and determine the video frames of the substitute media from the advertisement data based on the references to the video frames of the substitute advertisement in the advertisement data. The interactive media guidance application may then, in response to the fast forward instruction, display the identified video frames.

As another example, each video frame of the advertisement that includes substitute media may be identified using a flag or another such mechanism. In such cases, in response to an instruction to fast forward, the interactive media guidance application may run through the video frames of the advertisement and identify and display the video frames that are flagged.

The interactive media guidance application may display each identified video frame for any suitable time that may be determined from the fast forward rate and the distribution of identified video frames in the advertisement. For example, the interactive media guidance application may determine how many video frames were skipped before reaching the current identified video frame. If the fast forward rate is substantially equal to the number of skipped frames (e.g., skipped 9 frames, and fast forward rate is 8x), the interactive media guidance application may display the identified frame for only one display interval (e.g., 1/30 of a second if 30 frames are displayed per second). If the fast forward rate is less than the number of skipped frames (e.g., skipped 25 frames and fast forward rate is 8x), the interactive media guidance application may display the identified video frame for a number of display intervals that corresponds to the number of skipped frames (e.g., for 3 display intervals). If the fast forward rate is more than the number of skipped frames (e.g., skipped 4 frames and fast forward rate is 8x), the interactive media guidance application may skip one or more identified video frames. In some embodiments, the allowable fast forward rates may be limited for the duration of the advertisement based on the substitute media. For example, the interactive media guidance application may generally support fast forward rates of 2x, 4x, 8x, and 16x, but during a particular advertisement may only support 2x and 4x. In this situation, if the user has previously selected a 16x fast forward speed, the interactive media guidance application may automatically reduce it to 4x for the duration of the advertisement and automatically restore it to 16x when the end of the advertisement (and substitute media) has been reached.

In some embodiments, the interactive media guidance application may display substitute media for only one or more fast forward rates (e.g., 8x but not 2x). The determination of whether or not the fast forward rate supports substitute media may be advertisement specific, and identified in advertisement data associated with each advertisement.

If the first video frame of substitute media is not immediately next in the playback stream, the interactive media guidance application may delay the fast forward instruction until it reaches the next identified video frame, or the interactive media guidance application may display the video frames that would normally be displayed in response to a fast forward instruction until it reaches the next substitute media video frame, or the interactive media guidance application may immediately skip to the first video frame of substitute media.

As another example, substitute media may be incorporated in the advertisement using hidden video frames. The principle behind this approach is persistence of vision, by which the perceptual process of the brain retains an image for a brief moment, and therefore cannot perceive each individual frame that is displayed in the advertisement. Substitute media may be incorporated in additional frames that are not part of the advertisement and that are distributed throughout the advertisement such that the additional video frames are not individually perceptible at playback speed (i.e., 1x rate). In response to a fast forward instruction, the additional video frames are displayed substantially closer in time (e.g., one after the other) or repeated for emphasis such that the video frames, and the substitute media the video frames depict, becomes perceptible or emphasized. In some embodiments, the interactive media guidance application may feed the hidden frames to an encoder for real-time encode such that the playback of the substitute media is smooth.

The substitute media incorporated in hidden video frames may be provided with audio, for example from a substitute audio stream. As another example, the audio for the substitute media may be included in the hidden video frames (e.g., in the VBI of each video frame).

The following example will serve to illustrate this approach. Using the MPEG-2 algorithm, an advertisement may be encoded as a series of GOPs. The video frames of substitute media may be inserted, encoded as I-frames (e.g., frame Ih), as single I-frames between GOPs. The frame sequence for the advertisement with hidden video frames may then be, for example, IBBPBBPBBPBBP Ih IBBPBBPBBPBBP IBBPBBPBBPBBP Ih IBBPBBPBBPBBP Ih ... During normal playback, the Ih frames may or may riot be displayed, but even if they are displayed, are marginally or not perceptible to the user. In response to an instruction to fast forward the advertisement, the interactive media guidance application may identify the hidden I frames of the substitute media (e.g., identify the Ih frames using a flag) and sequentially display the identified hidden I frames. The duration of the display of each hidden I frame may also be determined automatically or via additional information provided in the advertisement data.

As still another example, substitute media may be incorporated in an advertisement by starting with the substitute media, and constructing an advertisement around the existing substitute media. For example, an advertiser may begin by creating substitute media (e.g., a video clip), and then add additional video frames in between the video frames of the substitute media such that the combination of the substitute media video frames and additional video frames forms an advertisement. The additional video frames may be related to the substitute media (e.g., such that the video frames of the substitute media appear to be parts of the advertisement, the same as the additional video frames), or they may be unrelated to the substitute media (e.g., the video frames of the substitute media are like hidden frames that are imperceptible to the user unless the advertisement is fast forwarded).

The above described embodiments of the present invention are presented for purposes of illustration and not of limitation, and the present invention is limited only by the claims which follow. For example, this invention is described primarily in terms of an interactive media guidance application. However, it may be embodied within any other suitable type of application, such as a trick play application, a personal video recorder application, a video-on-demand application, a program guide application, or any other suitable application. This application also primarily describes substituting media while an advertisement is fast forwarded. In some embodiments, the substitution may be carried out in other trick play modes, such as while rewinding, within the scope of this invention.

## Claims

1. A method for incorporating substitute media in a video comprising intracoding frames, forward prediction and bidirectional prediction frames between the intracoding frames defining a group of pictures structure comprising an intracoding frame and the forward and bidirectional prediction frames following the intracoding frame, such that the substitute media is displayed when the video is fast forwarded on equipment (110) in an interactive media system, **characterized by**:
incorporating video frames of the substitute media among the video frames of the video by inserting the video frames of the substitute media encoded as intracoding frames between adjacent groups of pictures of the video so that (i) the substitute media is displayed in a manner perceptible by a user when the user fast forwards the video with the equipment (110) and (ii) the substitute media is not perceptible by the user during normal playback of the video;
distributing the video incorporating the substitute media to the equipment (110).

2. The method of claim 1, wherein the equipment is one of a set-top box, a recording device, a storage device, a personal computer, a television, a portable media device, and a cellular telephone.

3. The method of claim 1, wherein incorporating the substitute media further comprises automatically incorporating the substitute media.

4. The method of claim 1 further comprising fast forwarding the video with incorporated substitute media to preview the display of the substitute media.

5. The method of any proceeding claim, wherein the video is an advertisement.

6. A system for incorporating substitute media in a video comprising intracoding frames, forward prediction and bidirectional prediction frames between the intracoding frames defining a group of pictures structure comprising an intracoding frame and the forward and bidirectional prediction frames following the intracoding frame, such that the substitute media is displayed when the video is fast forwarded on equipment (110) in an interactive media system, the system comprising a display device and control circuitry, **characterized in that** the control circuitry is configured to:
incorporate the substitute media among the video frames by inserting the video frames of the substitute media encoded as intracoding frames between adjacent groups of pictures of the video so that (i) the substitute media is displayed in a manner perceptible by a user when the user fast forwards the advertisement with the equipment(100) and (ii) the substitute media is not perceptible by the user during normal playback of the video;
distribute the video incorporating the substitute media to the equipment (110).

7. The system of claim 6, wherein the equipment is one of a set-top box, a recording device, a storage device, a personal computer, a television a portable media device, and a cellular telephone.

8. The system of claim 6, wherein the control circuitry is further configured to automatically incorporate the substitute media.

9. The system of claim 6, wherein the control circuitry is further configured to:
fast forward the video with substitute media; and direct the display device to display the fast forwarded video to preview the display of the substitute media.

10. The system of any one of claims 6 to 9, wherein the video is an advertisement.

## Patentansprüche

1. Verfahren zum Einbinden von Ersatzmedien in ein Video, das Intracoding Frames, Frames für die Vorwärtsvorhersage und für die bidirektionale Vorhersage zwischen den Intracoding Frames beinhaltet, welche eine Bildstrukturgruppe definieren, die einen Intracoding Frame und die auf den Intracoding Frame folgenden Frames für die Vorwärtsvorhersage und die bidirektionale Vorhersage umfasst, so dass das Ersatzmedium angezeigt wird, wenn das Video in einer Vorrichtung (110) in einem interaktiven Mediensystem vorgespult wird, **gekennzeichnet durch**:
Einbinden von Videoframes der Ersatzmedien in die Videoframes des Videos durch Einfügen der Videoframes der Ersatzmedien als Intracoding Frames kodiert zwischen benachbarten Bildergruppen des Videos, so dass das Ersatzmedium angezeigt wird, wenn ein Benutzer das Video mit der Vorrichtung (110) vorspult;
Weitergeben des Videos, in das das Ersatzmedium eingebunden ist, an die Vorrichtung (110).

2. Verfahren nach Anspruch 1, wobei die Vorrichtung eine aus einer Set-Top-Box, einem Aufnahmegerät, einem Speichergerät, einem Personalcomputer, einem Fernsehgerät, einem tragbaren Mediengerät und einem Mobiltelefon ist.

3. Verfahren nach Anspruch 1, wobei das Einbinden der Ersatzmedien ferner das automatische Einbauen der Ersatzmedien umfasst.

4. Verfahren nach Anspruch 1, ferner umfassend das Vorspulen des Videos mit dem eingebundenen Ersatzmedium, um die Anzeige des Ersatzmediums vorher zu betrachten.

5. Verfahren nach einem der vorstehenden Ansprüche, wobei das Video eine Werbung ist.

6. System zum Einbinden von Ersatzmedien in ein Video, das Intracoding Frames, Frames für die Vorwärtsvorhersage und für die bidirektionale Vorhersage zwischen den Intracoding Frames beinhaltet, welche eine Bildstrukturgruppe definieren, die einen Intracoding Frame und die auf den Intracoding Frame folgenden Frames für die Vorwärtsvorhersage und die bidirektionale Vorhersage umfasst, so dass das Ersatzmedium angezeigt wird, wenn das Video in einer Vorrichtung (110) in einem interaktiven Mediensystem vorgespult wird, wobei das System eine Anzeigevorrichtung und Steuerschaltkreise umfasst, **dadurch gekennzeichnet, dass** die Steuerschaltkreise dazu konfiguriert sind:
die Ersatzmedien in die Videoframes des Videos durch Einfügen der Videoframes der Ersatzmedien als Intracoding Frames kodiert zwischen benachbarten Bildergruppen des Videos einzubinden, so dass (i) das Ersatzmedium in einer Weise angezeigt wird, die von einem Benutzer wahrnehmbar ist, wenn der Benutzer die Werbung mit der Vorrichtung (110) vorspult und (ii) das Ersatzmedium vom Benutzer während der normalen Wiedergabe des Videos nicht wahrnehmbar ist;
das Video, in das das Ersatzmedium eingebunden ist, an die Vorrichtung (110) weiterzugeben.

7. System nach Anspruch 6, wobei die Vorrichtung eine aus einer Set-Top-Box, einem Aufnahmegerät, einem Speichergerät, einem Personalcomputer, einem Fernsehgerät, einem tragbaren Mediengerät und einem Mobiltelefon ist

8. System nach Anspruch 6, wobei die Steuerschaltkreise ferner dazu konfiguriert sind, automatisch die Ersatzmedien einzubauen.

9. System nach Anspruch 6, wobei die Steuerschaltkreise ferner dazu konfiguriert sind:
das Video mit den Ersatzmedien vorzuspulen; und die Anzeigevorrichtung anzuweisen, das vorgespulte Video anzuzeigen, um die Anzeige der Ersatzmedien vorher zu betrachten.

10. System nach einem der Ansprüche 6 bis 9, wobei das Video eine Werbung ist.

## Revendications

1. Procédé permettant d'incorporer un contenu multimédia de substitution dans une vidéo comprenant des trames d'intra-codage, des trames de prédiction vers l'avant et de prédiction bidirectionnnelle entre les trames d'intra-codage définissant une structure de groupe d'images comprenant une trame d'intra-codage et les trames de prédiction vers l'avant et bidirectionnelle suivant la trame d'intra-codage, de telle sorte que le contenu multimédia de substitution est affiché lorsque la vidéo est lue en avance rapide sur l'équipement (110) dans un système multimédia interactif, **caractérisé par** :
l'incorporation de trames vidéo du contenu multimédia de substitution parmi les trames vidéo de la vidéo en insérant les trames vidéo du contenu multimédia de substitution codées sous forme de trames d'intra-codage entre des groupes adjacents d'images de la vidéo de sorte que le contenu multimédia de substitution est affiché lorsqu'un utilisateur lit la vidéo en avance rapide avec l'équipement (110);
la distribution de la vidéo incorporant le contenu multimédia de substitution à l'équipement (110).

2. Procédé selon la revendication 1, dans lequel l'équipement est l'un d'un décodeur, d'un dispositif d'enregistrement, d'un dispositif de stockage, d'un ordinateur personnel, d'un téléviseur, d'un dispositif multimédia portable et d'un téléphone cellulaire.

3. Procédé selon la revendication 1, dans lequel l'incorporation du contenu multimédia de substitution comprend en outre l'incorporation automatique du contenu multimédia de substitution.

4. Procédé selon la revendication 1, comprenant en outre l'avance rapide de la vidéo avec le contenu multimédia de substitution incorporé pour prévisualiser l'affichage du contenu multimédia de substitution.

5. Procédé selon l'une quelconque des revendications précédentes, dans lequel la vidéo est une publicité.

6. Système permettant d'incorporer un contenu multimédia de substitution dans une vidéo comprenant des trames d'intra-codage, des trames de prédiction vers l'avant et de prédiction bidirectionnnelle entre les trames d'intra-codage définissant une structure de groupe d'images comprenant une trame d'intra-codage et les trames de prédiction vers l'avant et bidirectionnelle suivant la trame d'intra-codage, de telle sorte que le contenu multimédia de substitution est affiché lorsque la vidéo est lue en avance rapide sur l'équipement (110) dans un système multimédia interactif, le système comprenant un dispositif d'affichage et un ensemble de circuits de commande, **caractérisé en ce que** l'ensemble de circuits de commande est configuré pour :
incorporer le contenu multimédia de substitution parmi les trames vidéo de la vidéo en insérant les trames vidéo du contenu multimédia de substitution codées sous forme de trames d'intra-codage entre des groupes adjacents d'images de la vidéo de sorte que (i) le contenu multimédia de substitution est affiché d'une manière perceptible par un utilisateur lorsque l'utilisateur lit la publicité en avance rapide avec l'équipement (110) et (ii) le contenu multimédia de substitution n'est pas perceptible par l'utilisateur pendant une lecture normale de la vidéo ;
distribuer la vidéo incorporant le contenu multimédia de substitution à l'équipement (110).

7. Système selon la revendication 6, dans lequel l'équipement est l'un d'un décodeur, d'un dispositif d'enregistrement, d'un dispositif de stockage, d'un ordinateur personnel, d'un téléviseur, d'un dispositif multimédia portable et d'un téléphone cellulaire.

8. Système selon la revendication 6, dans lequel l'ensemble de circuits de commande est en outre configuré pour incorporer automatiquement le contenu multimédia de substitution.

9. Système selon la revendication 6, dans lequel l'ensemble de circuits de commande est configuré pour :
lire en avance rapide la vidéo avec un contenu multimédia de substitution ; et ordonner au dispositif d'affichage d'afficher la vidéo lue en avance rapide pour prévisualiser l'affichage du contenu multimédia de substitution.

10. Système selon l'une quelconque des revendications 6 à 9, dans lequel la vidéo est une publicité.
